Europäisches Patentamt

European Patent Office

Office européen des brevets

(1) Publication number: **0 203 759**
**B1**

# EUROPEAN PATENT SPECIFICATION

(45) Date of publication of patent specification: **09.05.90**

(51) Int. Cl.⁵: **C 04 B 35/52, C 25 D 13/00**

(21) Application number: **86303663.8**

(22) Date of filing: **14.05.86**

(54) **Process for producing carbon fiber-reinforced carbon composite.**

(30) Priority: **15.05.85 JP 104189/85**

(43) Date of publication of application:
**03.12.86 Bulletin 86/49**

(45) Publication of the grant of the patent:
**09.05.90 Bulletin 90/19**

(84) Designated Contracting States:
**DE FR GB**

(56) References cited: ---
**EP-A-0 122 425**
**EP-A-0 172 378**
**DE-A-1 940 063**
**FR-A-2 200 376**
**GB-A-1 255 925**
**GB-A-2 059 994**

**CHEMICAL ABSTRACTS, vol. 103, no. 8, August 1985, page 261, abstract no. 58040z, Columbus, Ohio, US; & JP-A-60 54 983 (SUMITOMO ELECTRIC INDUSTRIES LTD) 29-03-1985**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Yamashita, Yukinori c/o Itami Works of**
**Sumitomo Electric Ind. Ltd. 1-1, Koyakita 1-chome**
**Itami-shi Hyogo (JP)**
Inventor: **Iwata, Kouichi c/o Itami Works of**
**Sumitomo Electric Ind. Ltd. 1-1, Koyakita 1-chome**
**Itami-shi Hyogo (JP)**
Inventor: **Sakagami, Seigou c/o Itami Works of**
**Sumitomo Electric Ind. Ltd. 1-1, Koyakita 1-chome**
**Itami-shi Hyogo (JP)**

(74) Representative: **Pearce, Anthony Richmond et al**
**MARKS & CLERK Alpha Tower Suffolk Street Queensway Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the invention

This invention relates to a process for producing a carbon fiber-reinforced carbon composite having high performance.

### Background of the invention

A carbon fiber-reinforced composite (to be referred to as CFRC) composed of carbon fibers having a very high specific strength and specific modulus of elasticity and a carbonaceous material having excellent heat resistance has an excellent heat resistance, specific strength and specific modulus of elasticity and is used in heat-resistant parts in which conventional materials have been unable to find application.

Commercial CFRC materials now in use, however, have only a slight improvement over conventional carbonaceous materials in specific strength and specific modulus of elasticity in spite of their reinforcement with carbon fibers.

It is generally thought that in a fiber-reinforced composite, uniform dispersion of the fibers in the matrix is important for the exhibition of the reinforcing effect of the fibers. Desirably, the fibers are covered uniformly with a matrix. Examination of the CFRC now in commercial use from the standpoint of dispersion shows that the fibers are maldistributed in the matrix and do not exhibit a reinforcing effect. The dispersion of the fibers in the matrix is determined for the most part in a step of impregnating a substrate of fibers with a matrix substance in the process of producing CFRC. This step is carried out mainly by the vapor phase method or the liquid phase method. The vapor phase method comprises depositing carbon directly on fibers by the thermal decomposition of an organic gas such as methane, and the amount of carbon to be deposited can be controlled with relative simplicity. The vapor phase method, however, has the disadvantage that the gas has difficulty in permeating through the fine spaces or the central part of the fiber substrate. The liquid phase method (resin impregnating method) comprises using a liquid form of a resin convertible to carbon upon carbonization and applying the liquid resin to a substrate of fibers. The amount of the resin applied in this method is adjusted by the viscosity of the liquid, but cannot be accurately controlled.

By any of the vapor phase method and the liquid phase method, the amount of carbon or resin to be caused to adhere to the fibers cannot be controlled to a uniform value. If a technique of accurately controlling the amount of the reinforcing material is developed, the reinforcing effect of the fibers in the composite can be increased, and the resulting composite can have properties theoretically attainable. It would thus be possible to produce CFRC having markedly improved specific strength and specific modulus of elasticity over CFRC now in commercial use.

EP—A—0172378 (published 26 February 1986) discloses a method of producing CFRC in which (a) carbonaceous fine powder is adhered to a thermosetting resinous carrier (eg a phenolic resin) which is modified to form an electrocoating resin and ionized in a liquid (eg water); (b) the resinous carrier is dispersed in the liquid; (c) a carbon fiber substrate (eg a woven or non-woven fabric, paper, mat, string, filament, tape, sheet) and a counter electrode are placed in the dispersion; (d) a DC voltage is applied between the substrate and the counter electrode to deposit the carrier carrying the carbonaceous fine powder on the substrate by electrophoresis; (e) the resultant composite is then heated, and optionally pressed to the desired shape, to set the resinous carrier; and (f) the heated composite is calcined to form CFRC.

GB—A—1255925 discloses a process for the production of coated carbon filaments wherein a polymeric coating material (eg salts of polymers having free carboxyl groups, epoxy resins in the form of esters, acrylic polymers) is electrolytically or electrophoretically deposited from solution or emulsion in a liquid medium (normally water), the resultant coated carbon filaments being for incorporation into polymer matrices for reinforcement purposes.

### Summary of the invention

It is an object of this invention to provide a method of forming a matrix uniformly and in the required amount on reinforcing fibers in CFRC.

Specifically, according to this invention, a material (to be referred to as a carbon precursor) such as a liquid resin can be caused to adhere in the required amount uniformly to fibers by utilizing the theory of electrophoretic deposition (to be referred to as electrodeposition) instead of causing it to adhere merely by its viscosity.

The present invention thus provides a process for producing a carbon fiber-reinforced carbon composite, which comprises ionizing and dispersing an electrodepositable resin obtained by modifying a phenolic resin, polyacrylonitrile resin, or a derivative thereof in water, immersing a substrate of carbon fibers and a counter electrode in the dispersion, applying a direct-current voltage between the carbon fiber substrate and the counter electrode to cause a required amount of the resin to adhere to the surface of the carbon fiber substrate by electrophoresis, molding the fibers, and carbonizing the molded product to convert the resin into carbon and thereby to form a composite in which the carbon as a matrix covers the carbon fibers characterized in that the substrate of carbon fibers is a three-directional fabric (mutli-filaments) comprising at least three-directional reinforcing yarns (tri-or higher-directional reinforcing yarns).

In a general electrodeposition coating process, the electrophoretic force of the resin is reduced because the coating composition contains a large amount of a substance which is difficult to migrate by electrophoresis, such as a pigment. In the present invention, such a substance is hardly contained or contained only in a very small amount. Hence, there is scarcely any reduction in electrophoretic force, and the amount of the resin to adhere can be accurately controlled by the electric charge during the electrodeposition.

In the prior art, the amount of the resin to adhere to fibers is generally controlled by the viscosity of the resin. Specifically, if the viscosity of the resin is increased, the amount of the resin deposited increases, and if the viscosity is decreased, the amount of the resin deposited decreases. In contrast, according to this invention, the amount of the resin to adhere to the fibers can be controlled by the voltage applied during the electrodeposition.

In a conventional process for impregnating the three direction fabrics with a resin in a liquid phase, the total weight of the fabric and the resin is markedly increased due to the use of a liquid resin for impregnation. This causes a serious problem in that the resin-impregnated fabrics tend to be deformed during pulling up from the liquid phase, and the desired directional fiber reinforcement cannot be achieved. However, in accordance with the process of this invention, the resin is deposited as a solid component on the substrate, and the total weight of the substrate and the resin can be reduced as compared with that obtained by the conventional process. Further, although the resin is not crosslinked at the time of electrodeposition, the electrodeposited resin according to the present invention imparts a certain degree of mechanical strength to the three-directional fabrics and, thus, minimises the deformation of the fabrics during pulling up the fabrics from the liquid phase. In this manner, the three-directional fabrics coated with a resin can be easily produced according to the process of this invention without causing deformation of the fabrics.

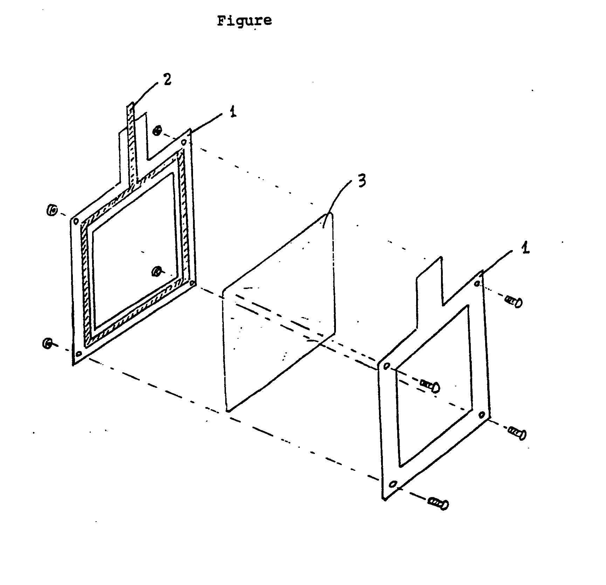

Brief description of the drawing

Figure is a schematic view of the frame for fixing a fabric of carbon fibers. 1 is plastic frame, 2 is copper electrode and 3 is fabric of carbon fibers.

Detailed description of the invention

According to the process of this invention, a resin which becomes a carbon precursor is electrically charged in a liquid and caused to adhere to electrically conductive carbon fibers by electrophoresis. The amount of the resin to be caused to adhere and the uniformity of adhesion are thus electrically controlled.

The resin which becomes a carbon precursor is desirably a phenolic resin whose carbonization yields in the carbonization step are high, or a polyacrylic resin whose carbonization yield is increased by an oxidation treatment to render it infusible. The resin is modified by attaching a polar group such as a carboxylic acid group (anionic) and an amino group (cationic) in order to make the resin capable of migration by electrophoresis.

The resins which can be used in the present invention include phenol resins, polyacrylonitrile resins, or derivatives thereof. Examples of such resins include water-soluble acrylonitrile resins such as an acrylonitrileacrylic acid resin, a water-solube phenol resin, a water-soluble phenol-alkyd resin, etc.

The modification of these resins to prepare an electrodepositable resin or to make the resin water-soluble can be carried out by various methods which vary depending upon the type of the resin used, as described hereinafter in detail.

When an acrylonitrile resin is used, a water-soluble acrylonitrile resin can be prepared by polymerizing acrylonitrile with a copolymerizable acid or base and, if desired, a copolymerizable monomer in an organic solvent in the presence of a polymerization initator at a temperature of about 80°C for a period of about 2 to about 10 hours, and then neutralizing the resulting mixture.

Examples of copolymerizable acids include acrylic acid, methacrylic acid, crotonic acid, itaconic acid, maleic acid, fumaric acid and the like. Examples of copolymerizable bases inlcude dimethylaminoethyl acrylate, diethylaminoethyl acrylate, dimethylaminopropyl acrylate, dimethylaminobutyl acrylate, dimethylaminoethyl methacrylate, diethylaminoethyl methacrylate, dimethylaminopropyl methacrylate, dimethylaminobutyl methacrylate and the like.

Examples of copolymerizable monomers include compounds having an ethylenically unsaturated bond, for example, styrene, vinyl acetate, etc.

Examples of polymerization initiators include organic peroxides such as benzoyl peroxide, t-butyl peroxide, cumene hydroperoxide, and azo type compounds such as azobisisobutyronitrile, etc.

The neutralization of the polymerization mixture can be effected with a base such as ammonia, ethylamine, morpholine, etc., or with an acid such as hydrochloric acid, acetic acid, nitric acid, lactic acid, tartaric acid, glycolic acid, etc.

When a phenol resin is used, a water-soluble phenol resin prepared by reacting an o-or p-substituted phenol with formaldehyde in the presence of an alkali catalyst, as well as a mixture of a water-soluble alkyd resin and a water-soluble phenol resin can be used.

Examples of the solvents used for the preparation of resins include water-soluble organic solvents such as dimethylformamide, dimethylacetamide, methyl cellosolve, ethyl cellosolve, butyl carbitol, cellosolve acetate, acetone, methanol, ethanol, isopropanol, tetrahydrofuran, or a mixture thereof.

The electrodepositable resin thus prepared in the above organic solvent is then ionized and dispersed in ion-exchange water to prepare an anionic or cationic electro-depositing solution, depending upon the electric charge (anionic or cationic) of the resin. When the electrodepositable resin is water-soluble, the resin can be ionized and dispersed (dissolved) in ion-exchange water without using the above organic solvent, though such solvents may be used, if desired.

The concentration of the resin in the electrodepositing solution is in the range of from about 3% to about 40% by weight.

The electrodepositing solution preferably has a pH in the range of from about 6 to about 8.

Then, a substrate of carbon fibers (which is in the form of a three-directional fabric comprising at least three-directional reinforcing yarns), and a counter electrode, e.g., a stainless steel electrode, are dipped in the electrodepositing solution of the resin. The substrate of carbon fibers itself can be used as an electrode (an anode or cathode). Since the substrate is in the form of a fabric, a frame for fixing the fabric, for example, a plastic frame having a metal electrode, etc., a copper electrode, as illustrated in the drawing, can be advantageously used for the electrodeposition. The frame shown in the drawing can take various forms depending upon the shape of the substrate of carbon fibers used for the electrodeposition. When the electrodepositing solution is anionic (i.e., an anionic resin), the substrate of carbon fibers is used as an anode.

In the electrodeposition, a direct current voltage of about 20 to about 300 V, preferably 50 to 150 V, is applied to the electrodes. When the voltage is less than about 20 V, the electrodeposition cannot be performed effectively, whereas the voltage is higher than about 300 V, dielectric breakdown of the deposited resin layer may occur whereby a uniform deposition cannot be obtained.

The electrodeposition can be carried out until the desired amount of the resin is deposited on the carbon fiber substrate. The amount of the resin deposited can be controlled by varying the deposition time, the voltage applied and the temperature of the electrodepositing solution. Generally, the amount of the resin deposited increases as the electrodeposition time and/or the voltage increases. During the electrodeposition, the temperature of the solution can be adjusted to a range of from about 10° to about 50°C, preferably at about 30°C. Thus, by controlling the deposition time, the voltage and the temperature of the solution, the resin can be deposited to a carbon fiber substrate in an amount of about 20% to about 300% by weight, preferably 150% to 250% by weight, based on the weight of the carbon fiber substrate, on a dry basis, for example, after drying the resin-deposited carbon fibers at room temperature for 20 minutes and then drying at 110°C for 20 minutes.

The resin-deposited substrate is then removed from the electrodepositing solution and air dried at room temperature for a period of about 10 minutes to about 100 hours, and then molded into a desired shape. The molding can be carried out under conditions which vary depending upon the type of the resin used, but generally is conducted at a temperature of from about 50°C to about 300°C under a pressure of about 5 to about 500 kg/cm².

The molded article is then cured at a temperature of about 100°C to about 400°C for a period of about 1 to about 100 hours. When polyacrylonitrile resins are used, the curing is preferably conducted in an air oven since the resin requires oxygen as the curing proceeds.

The molded article is further heat-treated, or subjected to a treatment for rendering it infusible, at a temperature of about 150° to about 300°C for a period of about 1 to about 20 hours to complete the curing reaction of the resin. Thereafter, the cured molded article is carbonized in an inert atmosphere such as argon by gradually increasing the temperature to the range of about 700 to about 3000°C, preferably 1000°C to 2000°C, at an increasing rate of about 30° to 200°C/hour. By performing the carbonization under pressure, e.g., a pressure higher than about 50 kg/cm², preferably 200 to 300 kg/cm², a carbonized product having a higher density than that obtained by carbonization under atmospheric pressure can be obtained.

Since the resin is used as a carbon precursor, fine pores occur as a result of the volatile components of the resin escaping from the molded product during carbonization. It is possible to obtain a composite having increased strength by impregnating the carbonized article again with a resin solution to fill the pores and repeating the carbonization, if desired.

Due to the insulating nature of the resin coating layer formed by electrodeposition, it is sometimes impossible to cause an additional amount of the resin to adhere on the resin coating layer. If it is desired to adhere a large amount of the resin to the fibers in the process of this invention, a small amount of electroconductive fine powders of carbon, such as carbon black, artificial or natural graphite, coke or the like, can be included in advance into the resin so that the insulating nature of the resin coating layer can be reduced and a large amount of the resin can be caused to adhere to the fibers. The carbon powder preferably has an average particle size of less than 10 μm, more preferably less than 1 μm, and can be used in an amount of from about 3 to about 5% by weight based on the weight of the resin.

The present invention is further illustrated by the following Examples and Comparative Examples, but is not limited thereto. In these Examples, parts, percents, ratios and the like are by weight unless otherwise indicated.

Reference Example 1

A mixture of a water-soluble phenol resin and methanol at a ratio of 15:10 was thoroughly kneaded, and 25 parts of the resulting solution was mixed and dispersed in 75 parts of ion-exchange water to prepare an anionic electrodepositing solution. A woven cloth of PAN-type high-modulus carbon fibers (T-300, manufactured by Toray Industries, Inc.) was cut into a size of 140 mm×140 mm and fixed to a frame for fixing a woven cloth comprising two plastic plates and a copper electrode as illustrated in Figure which was used as an anode. A stainless steel plate was used as a counter cathode. These two electrodes were dipped in the above-prepared electrodeposition solution, and a direct-current voltage of about 100 V was applied to the electrodes. An electric current was passed for about 20 minutes. After passing the electric current, the carbon fiber woven fabric deposited uniformly with the resin was removed slowly from the solution together with the frame and air-dried at room temperature for 20 minutes. The carbon fiber woven fabric was removed from the frame, dried at 110°C for 20 minutes, and the resin-deposited portion of the fabric was cut. The resulting resin-deposited fabric had a weight ratio of carbon fiber substrate/resin of 10/15.

50 sheets of the resulting fabric were laminated and compression-molded at a temperature of about 170°C under a pressure of 200 kg/cm$^2$ for 10 minutes to obtain a heat-molded article, and the article was further subjected to a curing treatment by allowing it to stand in a hot air oven at 250°C for 20 hours.

The molded article was then carbonized in an inert atmosphere by heating from room temperature to a temperature of 2000°C under a pressure of 200 kg/cm$^2$. In this carbonization, the temperature was increased up to 1000°C at a rate of 30°C/hour and the increased up to 2000°C at a rate of 200°C/hour.

The CFRC thus obtained was examined under an optical microscope and found that the carbon fibers were distributed uniformly in the resin matrix. The resulting CFRC had a specific gravity of 1.5, a flexural strength of 950 kg/cm$^2$ and a flexural modulus of elasticity of 1100 kg/cm$^2$.

Comparative Example 1

A mixture of the water-soluble phenol resin used in Reference Example 1 and methanol at a weight ratio of 15:10 was thoroughly kneaded, and a woven cloth of PAN-type high-modulus carbon fibers (T-300) was immersed into the resulting solution and then slowly removed from the solution to obtain the fabric immersed with the phenol resin. The fabric was pressed softly to remove an excess of the solution to obtain a fabric having a weight ratio of carbon fiber substrate/resin of 10/25. The fabric was then air-dried at room temperature for 20 minutes and then at a temperature of 110°C for 20 minutes, and cut into a predetermined size.

The laminated fabric (50 sheets) was then molded, cured and carbonized at a temperature up to 2000°C in the same manner as described in Reference Example 1 to obtain CFRC.

The CFRC thus obtained was examined under an optical microscope and found that a number of voids having no resin matrix are present between the carbon fibers. The resulting CFRC had a specific gravity of 1.5, a flexural strength of 550 kg/cm$^2$ and a flexural modulus of elasticity of 350 kg/mm$^2$. It was found that the CFRC has a markedly low flexural modulus of elasticity as compared with the CFRC obtained in Reference Example 1.

Reference Example 2

A mixture of 90 parts of acrylonitrile, 10 parts of acrylic acid and 1.5 part of azobisisobutyronitrile as a polymerization initiator was added dropwise to 150 parts of dimethylformamide as a solvent heated at 80°C, and the resulting mixture was allowed to react for 6 hours to prepare an electrodepositable resin. To the resulting resin were added 24 parts of morpholine and 130 parts of water, and the mixture was mixed homogeneously. The resulting solution had a solid content of 25%, a viscosity of 300 cp at 30°C and a pH of 6.4. 100 parts of the solution was homogeneously dispersed in 67 parts of ion-exchange water using a disper to prepare an anionic electrodepositing solution.

The same woven cloth of PAN-type high-modulus carbon fibers as used in Reference Example 1 (140 mm×140 mm in size) was fixed on the frame for fixing the fabric as illustrated in Figure, and dipped in the anionic electrodepositing solution in the same manner as described in Reference Example 1 to effect the electrodeposition using a direct current voltage of about 100 V for about 20 minutes.

The fabric was removed from the frame, dried at 110°C for 20 minutes, and the resin-deposited portion of the fabric was cut. The resulting resin-deposited fabric had a weight ratio of carbon fiber substrate/resin of 10/16.

500 sheets of the resulting fabric were laminated and compression-molded at a temperature of about 200°C under a pressure of about 30 kg/cm$^2$ for 20 minutes to obtain a heat-molded article, and the article was further subjected to a curing treatment by allowing it to stand in a hot air oven at 250°C for 5 hours.

The molded article was then carbonized in an inert atmosphere by heating from an initial temperature of 350°C to a temperature of 2000°C under a pressure of 300 kg/cm$^2$. In this carbonization, the temperature was increased up to 1000°C at a rate of 30°C/hour and then increased up to 2000°C at a rate of 200°C/hour.

The CFRC thus obtained had a specific gravity of 1.7 and a flexural strength of 1950 kg/cm$^2$.

Reference Example 3

The resin article prepared in Reference Example 1 was heated to a temperature of 1000°C while increasing the temperature at a rate of 30°C/hour in an inert atmosphere without applying pressure, and, thereafter, the temperature was increased up to 2000°C at a rate of 200°C/hour to obtain CFRC. The resulting CFRC was impregnated with a phenol resin in vacuo and then carbonized in the same manner as described in Reference Example 1 at a temperature of 2000°C. The above treatments, i.e., impregnation with the phenol resin and then carbonization, were repeated three times to obtain a high-density CFRC having a specific gravity of 1.6 and a flexural strength of 1300 kg/cm$^2$.

## Example 1

A filament yarn of PAN-type high-modulus carbon fibers was continuously supplied and dipped into the same electrodepositing solution as used in Reference Example 2. The yarn was used as an anode, and a stainless steel plate was used as a counter cathode. A direct current voltage of 150V was applied to the electrodes to effect the electrodeposition. The resulting yarn had a substrate/resin weight ratio of 1/2. The electrodepositioned yarn was removed from the solution, cut into a length of 10 to 50 mm, filled in a metal mold, and subjected to heat-molding and crosslinking reaction under the same conditions as used in Reference Example 2. The resulting yarn was then subjected to carbonization up to a temperature of 2000°C under the same conditions as used in Reference Example 2 to obtain CFRC having a specific gravity of 1.7 and a flexural strength of 1200 kg/cm².

## Reference Example 5

An anionic electrodepositing solution was prepared by kneading a mixture of polyacrylonitrile/acrylic acid resin and an artificial graphite powder having an average particle size of about 1 m at a weight ratio of 8:2 with a solvent, and then dispersing the mixture in water. The woven cloth of PAN-type high-modulus carbon fibers as used in Reference Example 2 was subjected to the electrodeposition in the same manner as described in Reference Example 2 to obtain the carbon fiber woven fabric deposited with the resin containing artificial graphite powder. The resulting fabric had a substrate/resin weight ratio of 1/2.5, and, thus, the resin was deposited on the fabric in an amount higher than that of Reference Example 2. The resulting fabric was subjected to the heat-molding and the crosslinking reaction and then to the carbonization under pressure in the same manner as described in Reference Example 2 to obtain CFRC having a specific gravity of 1.7 and a flexural strength of 1870 kg/cm².

## Example 2

A carbon fiber substrate in the form of a three-directional fabric composed of three-directional yarns which are woven at a right angle to each other having a size of 100×100×100 mm was coated by electrodeposition with a resin using the electrodepositing solution used in Reference Example 2, and then the substrate was pulled up from the solution. The resulting substrate did not show any deformation, and, after subjected to crosslinking reaction by heating, it was heated up to a temperature of 2000°C in an inert atmosphere without applying pressure to obtain CFRC.

## Comparative Example 2

The carbon fiber substrate in the form of a three-directional fabric as used in the preceding Example was immersed in the same resin solution as used in Comparative Example 1, and the carbon fiber substrate impregnated with the water-soluble phenol resin was pulled up from the solution. In this case, the fiber substrate was significantly deformed due to the weight of impregnated resin, and the resin-impregnated carbon fiber substrate of the desired shape was not obtained.

As shown above, the process of this invention can easily give CFRC which has high flexural strength and high modulus of elasticity and contains no space among the fibers.

## Claims

1. A process for producing a carbon fiber-reinforced carbon composite, which comprises ionizing and dispersing an electrodepositable resin obtained by modifying a phenolic resin, polyacrylonitrile resin, or a derivative thereof in water, immersing a substrate of carbon fibers and a counter electrode in the dispersion, applying a direct-current voltage between the carbon fiber substrate and the counter electrode to cause a required amount of the resin to adhere to the surface of the carbon fiber substrate by electrophoresis, moulding the fibers and carbonizing the molded product to convert the resin into carbon and thereby to form a composite in which the carbon as a matrix covers the carbon fibers, characterized in that the substrate of carbon fibers is a three-directional fabric comprising at least three-directional reinforcing yarns.

2. The process as claimed in claim 1, wherein the electrodepositable resin contains coke or a graphite powder having a particle size of not more than 10 μm.

## Patentansprüche

1. Verfahren zur Herstellung eines kohlenstoffaserverstärkten Kohlenstoffverbundwerkstoffs, umfassend das Ionisieren und Dispergieren eines durch Modifizieren eines phenolischen Harzes, Polyacrylnitrilharzes oder eines Derivates hiervon erhaltenen, elektroabscheidbaren Harzes in Wasser, Eintauchen eines Substrats aus Kohlenstoffasern und einer Gegenelektrode in die Dispersion, Anlegen einer Gleichstromspannung zwischen dem Kohlenstoffasersubstrat und der Gegenelektrode, um zu bewirken, daß eine erforderliche Menge des Harzes an der Oberfläche des Kolhenstoffasersubstrats durch Elektrophorese haftet, Formen der Fasern und Carbonisieren des geformten Produkts, um das Harz in Kohlenstoff unzuwandeln und dadurch einen Verbundwerkstoff zu bilden, in dem der Kohlenstoff als eine Matrix die Kohlenstoffasern bedeckt, dadurch gekennzeichnet, daß das Substrat aus Kohlenstoffasern ein drei-direktionaler Stoff, umfassend wenigstens drei-dirketionale Verstärkungsfasern, ist.

2. Verfahren nach Anspruch 1, wobei das elektroabscheidbare Harz Koks oder ein Graphitpulver mit einer Teilchengröße von nicht mehr als 10 μm enthält.

**Revendications**

1. Un procédé de production d'un composite de carbone renforcé de fibres de carbone qui comprend l'ionisation et la dispersion d'une résine déposable par électrodéposition obtenue par modification d'une résine phénolique, d'une résine de polyacrylonitrile, d'un dérivé de cette dernière dans l'eau, l'immersion d'un substrat de fibers de carbon et d'une contre-électrode dans la dispersion, l'application d'une tension de courant continu entre le substrat de fibres de carbone et la contre-électrode pour forcer une quantité requise de la résine à adhérer à la surface du substrat de fibres de carbone par électrophorèse, le moulage des fibres et la carbonisation du produit moulé pour convertir la résine en carbone et former ainsi un composite dans lequel le cargone en tant que matrice recouvre les fibres de carbone, caractérisé en ce que le substrat de fibres de carbone est un tissu tridirectionkel comprenant au moins des fils de renforcement tridirectionnels.

2. Le procédé selon la revendication 1, selon lequel la résine déposable par électrodéposition contient du coke ou une poudre de graphite ayant une taille de particule ne dépassant pas 10 μm.

EP 0 203 759 B1

**Figure**

1